# EUROPEAN PATENT APPLICATION

(11) **EP 4 752 411 A1**
(43) Date of publication of application: **03.06.2026**
(21) Application number: 24844524.9
(22) Date of filing: 27.06.2024
(51) Int. Cl.: F16K 11/02, F16K 27/00, F24F 3/14, H01M 8/04

(54) **CONTROL VALVE, HUMIDIFIER, AND FUEL CELL SYSTEM**

(30) Priority: 26.07.2023 CN 202310922348
(71) Applicant: Dongfeng Motor Group Co., Ltd., Wuhan, Hubei 430000 (CN)
(72) Inventor: LI, Xuerui, Wuhan, Hubei 430000 (CN); MA, Yi, Wuhan, Hubei 430000 (CN); GAN, Bo, Wuhan, Hubei 430000 (CN)
(74) Representative: Santarelli
(86) International application number: PCT/CN2024/101845
(87) International publication number: WO 2025/020830

(57) **Abstract**

A control valve, a humidifier, and a fuel cell system. The control valve (1000) comprises: a valve seat (100) being internally provided with a core cavity (110), and a first flow channel (120), a second flow channel (130) and a third flow channel (140) which are separately communicated with the core cavity (110), the valve seat (100) being provided with a first valve seat opening (121) communicated with the first flow channel (120), a second valve seat opening (131) communicated with the second flow channel (130), and a third valve seat opening (141) communicated with the third flow channel (140), and the first valve seat opening (121) and the second valve seat opening (131) being located at the same side of the valve seat (100). A valve core (200) is rotatably provided in the core cavity (110), and the valve core (200) is provided with a first valve opening (211) and a second valve opening (223) which are communicated with each other. The valve core (200) rotates relative to the valve seat (100) so as to enable the first valve opening (211) to correspondingly communicate with the first flow channel (120) or the second flow channel (130), the second valve opening (223) being used for communicating with the third flow channel (140). Two flow channels that can be controlled to be opened or closed are formed in the valve seat (100), and the first valve seat opening (121) and the second valve seat opening (131) have different communication positions with the humidifier (2000), thus lengths of paths that a cathode reaction gas flows through are different, and different transfer efficiencies of the cathode reaction gas with a humid and hot tail gas are achieved, thereby regulating the humidity of the cathode reaction gas.

## Description

### CROSS-REFERENCE TO RELATED APPLICATIONS

The present application claims priority to Chinese Patent Application No. 202310922348.5, filed on July 26, 2023, which is incorporated herein by reference in its entirety.

### Technical Field

The present application belongs to the technical field of fuel cells, and particularly relates to a control valve, a humidifier, and a fuel cell system.

### Background of the Invention

In a fuel cell, a humidifier is configured to increase the humidity of a cathode reaction gas, and maintain the humidity of the cathode reaction gas within an appropriate range, so as to ensure the smooth proceeding of an electrochemical reaction. In the related art, the humidifier adopts a membrane humidification mode, utilizes a humid and hot tail gas to humidify the cathode reaction gas, and performs heat and mass transfer inside the humidifier, so as to improve the temperature and humidity of the cathode reaction gas. However, humidifiers of this type are unable to perform humidity self-regulation and thus require additional pipelines and valves to be installed. The humidity of the cathode reaction gas after humidification is regulated by regulating the flow rate of the humid and hot tail gas and/or the cathode reaction gas, which results in the defects of the humidifier including complicated pipelines, numerous leakage points, large volume, and high cost.

It should be noted that information disclosed in the aforementioned background section is only intended to strengthen the understanding of the background of the present application, and thus may include information that does not constitute the prior art known to a person skilled in the art.

### Summary of the Invention

The present application is intended to at least solve the technical problems of a humidifier including complicated pipelines, numerous leakage points, large volume, and high cost to some extent. To this end, the present application provides a control valve, a humidifier, and a fuel cell system.

Technical solutions of the present application provide a control valve. The control valve includes a valve seat internally provided with a core cavity, and a first flow channel, a second flow channel, and a third flow channel that are separately communicated with the core cavity, the valve seat being provided with a first valve seat opening communicated with the first flow channel, a second valve seat opening communicated with the second flow channel, and a third valve seat opening communicated with the third flow channel, and the first valve seat opening and the second valve seat opening being located at a same side of the valve seat; and a valve core rotatably provided in the core cavity, the valve core being provided with a first valve opening and a second valve opening that are communicated with each other, the valve core rotating relative to the valve seat, so as to enable the first valve opening to correspondingly communicate with the first flow channel or the second flow channel, and the second valve opening being configured to communicate with the third flow channel.

**In** some preferred technical solutions, the valve seat is provided with fourth valve seat openings communicated with the core cavity, and the fourth valve seat openings, the first valve seat opening, and the second valve seat opening are located on a same side of the valve seat; and the valve core is provided with fourth valve openings communicated with the second valve opening, and the valve core rotates relative to the valve seat, so as to enable the fourth valve openings to correspondingly communicate with the fourth valve seat openings.

**In** some preferred technical solutions, the valve core includes a bottom core body with a hollow cylindrical structure and a top core body with a hollow cylindrical structure, a side wall of the bottom core body is provided with the first valve opening, a bottom surface of the bottom core body is provided with the fourth valve openings, and a side wall of the top core body is provided with the second valve opening.

**In** some preferred technical solutions, a distribution range of the first valve opening on the side wall of the bottom core body is less than or equal to 90°.

**In** some preferred technical solutions, the fourth valve seat openings are arc-shaped openings or fan-shaped openings less than or equal to 90°, and the fourth valve openings are arc-shaped openings or fan-shaped openings less than or equal to 90°; alternatively, the fourth valve seat openings are two oppositely arranged arc-shaped openings or fan-shaped openings each less than or equal to 90°, and the fourth valve openings are two oppositely arranged arc-shaped openings or fan-shaped openings each less than or equal to 90°; and when the first valve opening is not communicated with the first flow channel or the second flow channel, the fourth valve openings are communicated with the fourth valve seat openings.

**In** some preferred technical solutions, the valve core further includes a transmission shaft disposed on the top core body, and the transmission shaft passes through the core cavity and is located outside the valve seat.

The technical solutions of the present application further provide a humidifier. The humidifier includes a housing having a humidification chamber therein, the housing being provided with a cathode reaction gas inlet and a cathode reaction gas outlet that are communicated with the humidification chamber; a membrane tube disposed in the humidification chamber, the housing being provided with a humid and hot tail gas inlet and a humid and hot tail gas outlet that are communicated with the membrane tube; and the aforementioned control valve, the control valve being disposed on the housing, and the first valve seat opening and the second valve seat opening of the control valve being communicated with the humidification chamber via the cathode reaction gas inlet, or the first valve seat opening and the second valve seat opening of the control valve being communicated with the humidification chamber via the cathode reaction gas outlet.

**In** some preferred technical solutions, the valve seat is provided with fourth valve seat openings communicated with the core cavity of the valve core, and the fourth valve seat openings, the first valve seat opening, and the second valve seat opening are located on a same side of the valve seat; the valve core is provided with fourth valve openings communicated with the second valve opening, and the valve core rotates relative to the valve seat, so as to enable the first valve opening to correspondingly communicate with the first flow channel or the second flow channel, or enable the fourth valve openings to communicate with the fourth valve seat openings; and the fourth valve seat openings are communicated with the humidification chamber.

**In** some preferred technical solutions, the control valve is disposed on a side, opposite to the cathode reaction gas inlet, of the housing.

**In** some preferred technical solutions, any one of the first valve seat opening, the second valve seat opening, and the fourth valve seat openings are disposed opposite to the cathode reaction gas inlet.

The technical solutions of the present application further provide a fuel cell system. The fuel cell system includes the aforementioned humidifier.

The technical solutions of the present application at least have the following beneficial effects:
The control valve is provided with the first valve seat opening and the second valve seat opening simultaneously. By rotating the valve core relative to the valve seat, the first valve seat opening is made to be communicated with the first flow channel or the second valve seat opening is made to be communicated with the second flow channel, thereby forming two flow channels that can be controlled to be opened or closed inside the valve seat. After the control valve is disposed in the humidifier, the first valve seat opening and the second valve seat opening have different communication positions with the humidifier, thus lengths of flow paths that the cathode reaction gas passes through the humidifier and enters the control valve are different. By adjusting the lengths of the flow paths of the cathode reaction gas, the transfer efficiency between the cathode reaction gas and the humid and hot tail gas is regulated, hereby regulating the humidity of the cathode reaction gas. In other words, by setting the control valve in the humidifier, the self-regulation of the humidity of the cathode reaction gas can be realized, which can reduce the control difficulty and pressure fluctuation of the humidifier, and also avoid the setting of relatively bulky bypass pipelines and valves, so as to reduce the leakage points and costs of the humidifier.

### Brief Description of the Drawings

To describe the technical solutions in embodiments of the present application more clearly, the following briefly describes the accompanying drawings required for describing the embodiments. Apparently, the accompanying drawings in the following description show merely some embodiments of the present application, and a person of ordinary skill in the art may still derive other drawings from these accompanying drawings without creative efforts.
FIG. 1 shows a bottom view of a valve seat of a control valve according to an embodiment of the present application;
FIG. 2 shows a top view of a valve seat of a control valve in FIG. 1;
FIG. 3 shows a schematic diagram of a cross-sectional structure of a valve seat of a control valve in FIG. 1;
FIG. 4 shows a schematic three-dimensional structural diagram of a valve core of a control valve according to an embodiment of the present application;
FIG. 5 shows a schematic diagram of a cross-sectional structure of a valve core in FIG. 4;
FIG. 6 shows a bottom view of a valve core in FIG. 4;
FIG. 7 shows a schematic diagram of a regulation state of a control valve according to an embodiment of the present application;
FIG. 8 shows a bottom view of a control valve in FIG. 7;
FIG. 9 shows a schematic diagram of another regulation state of a control valve according to an embodiment of the present application;
FIG. 10 shows a bottom view of a control valve in FIG. 9;
FIG. 11 shows a schematic diagram of still another regulation state of a control valve according to an embodiment of the present application;
FIG. 12 shows a bottom view of a control valve in FIG. 11;
FIG. 13 shows a schematic sectional view of a working principle of a membrane tube of a humidifier in FIG. 12;
FIG. 14 shows a schematic diagram of a first humidification path of a humidifier in FIG. 12;
FIG. 15 shows a schematic diagram of a second humidification path of a humidifier in FIG. 12;
FIG. 16 shows a schematic diagram of a third humidification path of a humidifier in FIG. 12; and
FIG. 17 shows an architectural diagram of a path of a cathode reaction gas in a fuel cell system according to an embodiment of the present application.

### Reference numerals in the accompanying drawings:

1000: control valve; 100: valve seat; 110: core cavity; 111: fourth valve seat opening; 120: first flow channel; 121: first valve seat opening; 130: second flow channel; 131: second valve seat opening; 140: third flow channel; 141: third valve seat opening; 151: bottom wall of the valve seat; 152: side wall of the valve seat; 153: top wall of the valve seat; 154: partition plate of the valve seat; 200: valve core; 210: bottom core body; 211: first valve opening; 212: fourth valve opening; 213: bottom surface of the bottom core body; 214: side wall of the bottom core body; 215: bottom flow channel; 220: top core body; 221: top surface of the top core body; 222: side wall of the top core body; 223: second valve opening; 230: transmission shaft; 300: motor; 2000: humidifier; 2100: housing; 2110: humidification chamber; 2120: cathode reaction gas inlet; 2130: potting partition plate; 2140: humid and hot tail gas inlet flow channel; 2150: humid and hot tail gas outlet flow channel; 2160: cathode reaction gas outlet; 2161: first cathode reaction gas outlet; 2162: second cathode reaction gas outlet; 2163: fourth cathode reaction gas outlet; 2200: membrane tube; 2210: humid and hot tail gas inlet; 2220: humid and hot tail gas outlet; 3100: air filter; 3200: air flow meter; 3300: air compressor; 3400: intercooler; 3510: stack inlet humidity sensor; 3520: stack outlet humidity sensor; 3600: fuel cell; 3610: cathode; 3611: stack inlet for cathode reaction gas entering; 3612: stack outlet for humid and hot tail gas exiting; 3620: anode; 3710: pressure relief valve; 3720: back pressure valve; 3800: mixed discharge device; 3900: controller.

### Detailed Description of Embodiments

The technical solutions in the embodiments of the present application will be clearly and completely described below with reference to the accompanying drawings in the embodiments of the present application. Apparently, the described embodiments are only some rather than all of the embodiments of the present application. All other embodiments obtained by a person of ordinary skill in the art based on the embodiments of the present application without creative efforts shall fall within the protection scope of the present application.

In addition, reference numerals and/or reference letters can be repeated in different examples in the present application for the purpose of simplicity and clarity, which does not indicate the relationship between the various embodiments and/or settings discussed. In addition, the present application provides examples of various specific processes and materials, but those of ordinary skill in the art may be aware of the application of other processes and/or the use of other materials.

The present application will be described below with reference to the accompanying drawings and specific embodiments:

With the increasingly severe global environmental and energy issues, vehicles of fuel cells 3600 are regarded as the most promising energy power devices in the future due to their advantages such as zero pollution, high energy conversion efficiency, and wide range of raw material sources.

**In** a fuel cell 3600, a humidifier 2000 is configured to increase the humidity of a cathode reaction gas, and maintain the humidity of the cathode reaction gas within an appropriate range, so as to ensure the smooth proceeding of an electrochemical reaction. In the related art, the humidifier 2000 adopts a membrane humidification mode, utilizes a humid and hot tail gas to humidify the cathode reaction gas, and performs heat and mass transfer inside the humidifier 2000, so as to improve the temperature and humidity of the cathode reaction gas. However, humidifiers 2000 of this type are unable to regulate humidity on their own and thus require additional pipelines and valves to be installed. The humidity of the cathode reaction gas after humidification is regulated by regulating the flow rate of the humid and hot tail gas and/or the cathode reaction gas, which results in the defects of the humidifier including complicated pipelines, numerous leakage points, large volume, and high cost.

**In** the case of excessively high humidity of the humid and hot tail gas, there are two solutions. One solution is to add bypass pipelines and valves to allow part of the humid and hot tail gas to bypass the humidifier 2000 and be discharged directly. The humidity of the cathode reaction gas after humidification is regulated by controlling the flow rate of the humid and hot tail gas. This method of regulating the humidity of the cathode reaction gas not only increases the costs of pipelines and valves and raises the risk of leakage, but also leads to the waste of heat from the humid and hot tail gas. Another solution is to add bypass pipelines and valves to introduce a fresh cathode reaction gas into an over-humidified hot cathode reaction gas after humidification, so as to reduce the humidity of the cathode reaction gas that is fed into a stack after mixing to an appropriate range. That is, the humidity of the cathode reaction gas entering the stack is regulated by increasing the flow rate of the cathode reaction gas. This method of regulating the humidity of the cathode reaction gas not only increases the costs of pipelines and valves, but also increases the risk of leakage. The above-mentioned solutions all achieve the purpose of regulating the humidity of the cathode reaction gas by means of regulating the flow rate, but there are disadvantages of huge structures, complex pipelines, high control difficulties, and large pressure fluctuations in flow rate regulating devices.

For example, a humidity control system of a fuel cell 3600 includes an air feeder, a membrane humidifier 2000, a humidity sensor, a fuel cell 3600, a first exhaust manifold, a first control valve 1000, and a second control valve 1000. An air outlet end of the air feeder is communicated with an air inlet end of the fuel cell 3600 via a dry zone of the membrane humidifier 2000 and the humidity sensor. An air outlet end of the fuel cell 3600 is communicated with the first control valve 1000 via the first exhaust manifold and a wet zone of the membrane humidifier 2000, and is communicated with the second control valve 1000 via the first exhaust manifold. The humidity control system of the fuel cell 3600 is configured to regulate opening degrees of the first control valve 1000 and the second control valve 1000 based on monitoring results of the humidity sensor, so as to control the humidity of the air fed into the fuel cell 3600 to be maintained within a limited range. In this solution, the pipelines are complicated, and a tee joint needs to be added at a stack exhaust port, which correspondingly increases a quantity of pipelines and the risk of air path leakage points, and also results in a bulky structure. Meanwhile, two control valves 1000 are controlled to increase the complexity of the control performed by a fuel-cell control unit (FCU), that is, a controller 3900 of the fuel cell system. In addition, the opening or closing of the second control valve 1000 will cause pressure fluctuations at the cathode outlet, which is detrimental to the service life of the stack.

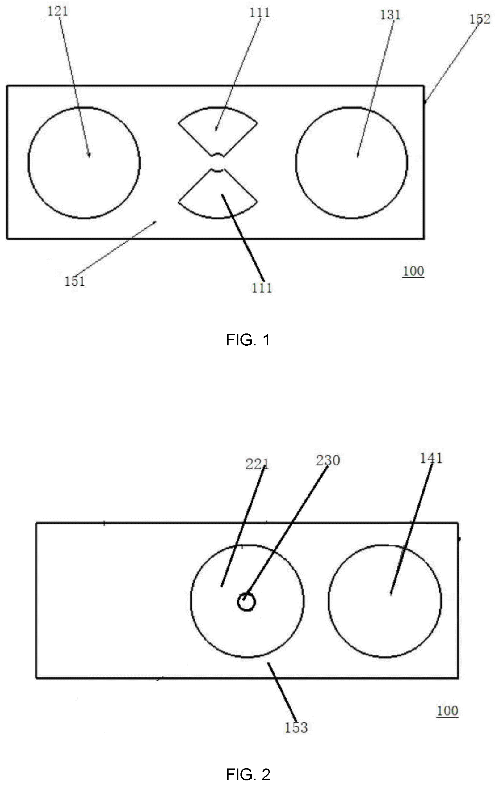

In view of the aforementioned problems of the humidifier 2000, the present application provides a control valve 1000. As shown in FIG. 1 to FIG. 12, in some embodiments, the control valve 1000 includes a valve seat 100 and a valve core 200. The valve seat 100 is internally provided with a core cavity 110, and a first flow channel 120, a second flow channel 130 and a third flow channel 140 that are separately communicated with the core cavity 110, the valve seat 100 is provided with a first valve seat opening 121 communicated with the first flow channel 120, a second valve seat opening 131 communicated with the second flow channel 130, and a third valve seat opening 141 communicated with the third flow channel 140, and the first valve seat opening 121 and the second valve seat opening 131 are located at a same side of the valve seat 100. The valve core 200 is rotatably provided in the core cavity 110, and the valve core 200 is provided with a first valve opening 211 and a second valve opening 223 that are communicated with each other. The valve core 200 rotates relative to the valve seat 100, so as to enable the first valve opening 211 to correspondingly communicate with the first flow channel 120 or the second flow channel 130, and the second valve opening 223 is configured to communicate with the third flow channel 140.

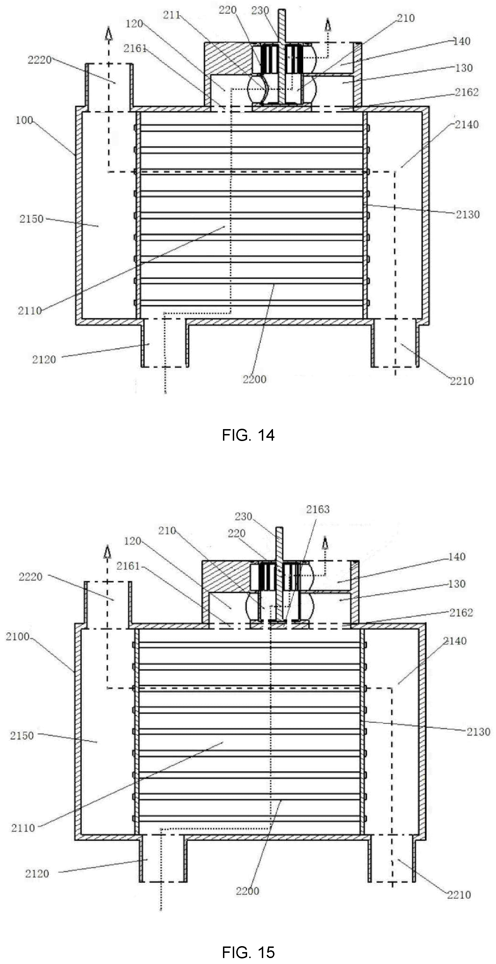

In the present application, at least the first valve seat opening 121 and the second valve seat opening 131 are simultaneously provided in the control valve 1000. By rotating the valve core 200 relative to the valve seat 100, the first valve seat opening 121 is made to be communicated with the first flow channel 120 or the second valve seat opening 131 is made to be communicated with the second flow channel 130, thereby forming two flow channels that can be controlled to be opened or closed inside the valve seat 100. As shown in FIG. 14 to FIG. 16, after the control valve 1000 is disposed in the humidifier 2000, the first valve seat opening 121 and the second valve seat opening 131 have different communication positions with the humidifier 2000, thus lengths of flow paths that the cathode reaction gas passes through the humidifier 2000 and enters the control valve 1000 are different. By adjusting the lengths of the flow paths of the cathode reaction gas, the transfer efficiency between the cathode reaction gas and the humid and hot tail gas is regulated, hereby regulating the humidity of the cathode reaction gas. In other words, by setting the control valve 1000 in the humidifier 2000, the self-regulation of the humidity of the cathode reaction gas can be realized, which can reduce the control difficulty and pressure fluctuation of the humidifier 2000, and also avoid the setting of relatively bulky bypass pipelines and valves, so as to reduce the leakage points and costs of the humidifier 2000.

In the control valve 1000 of the present application, the structural design of the valve seat 100 and the valve core 200 enables the valve core 200 to be in sealing fit with the valve seat 100. By controlling a rotation angle of the valve core 200 relative to the valve seat 100, on-off states of different flow channels of the control valve 1000 can be controlled, so as to regulate positions of a cathode reaction gas inlet 2120 and/or a cathode reaction gas outlet 2160 in the humidifier 2000. This makes a distance between the cathode reaction gas inlet 2120 and the cathode reaction gas outlet 2160 in the humidifier different, thereby varying an effective exchange length of the cathode reaction gas inside the humidifier 2000. The design achieves the purpose of regulating the water exchange efficiency on both sides of the membrane tube 2200, and ultimately realizes the self-regulation of the humidity of the cathode reaction gas in the humidifier 2000.

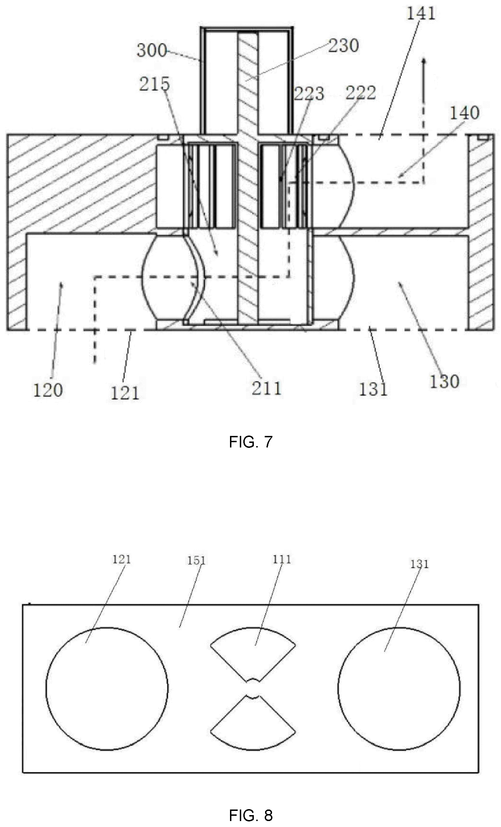

In some embodiments, the valve core 200 is rotatably provided in the core cavity 110. By rotating the valve core 200 relative to the valve seat 100, the first valve opening 211 of the valve core 200 can be correspondingly communicated with the first flow channel 120, and the second valve opening 223 of the valve core 200 is communicated with the third flow channel 140. In this case, a flow path of the cathode reaction gas in the control valve 1000 is shown in FIG. 7, and the cathode reaction gas flows through the first flow channel 120, the valve core 200, and the third flow channel 140 in sequence.

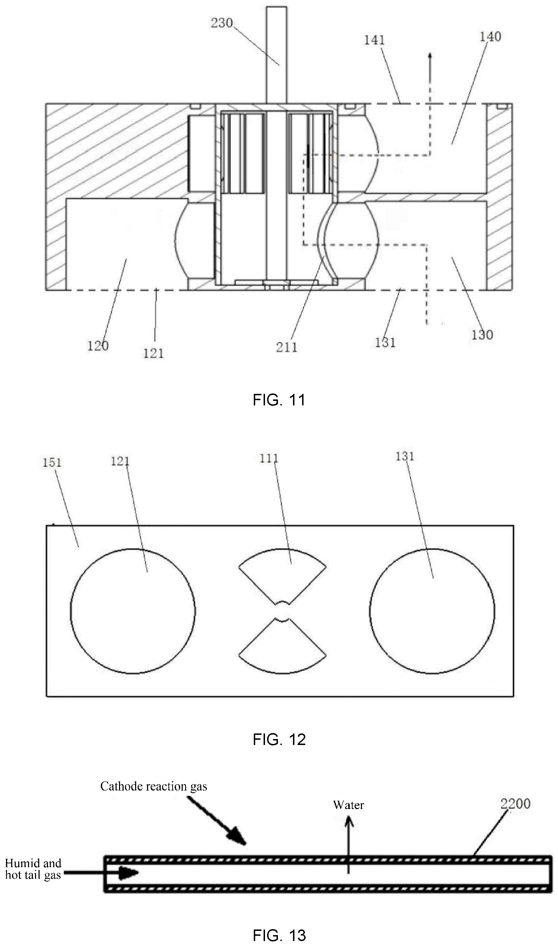

In some embodiments, the valve core 200 is rotatably provided in the core cavity 110. By rotating the valve core 200 relative to the valve seat 100, the first valve opening 211 of the valve core 200 can be correspondingly communicated with the second flow channel 130, and the second valve opening 223 of the valve core 200 is communicated with the third flow channel 140. In this case, a flow path of the cathode reaction gas in the control valve 1000 is shown in FIG. 11, and the cathode reaction gas flows through the second flow channel 130, the valve core 200, and the third flow channel 140 in sequence.

In some embodiments, the control valve 1000 may be communicated with the cathode reaction gas inlet 2120 of the humidifier 2000, such that the humidifier 2000 is provided with at least two cathode reaction gas inlets 2120 at different positions. Consequently, distances between the cathode reaction gas inlets 2120 at different positions in the humidifier 2000 and the cathode reaction gas outlet 2160 are different. When the cathode reaction gas enters the humidifier 2000 through the cathode reaction gas inlets 2120 at different positions, the effective exchange lengths of the cathode reaction gas along a length direction of the membrane tube 2200 inside the humidifier 2000 are different. This results in different water exchange efficiencies on both sides of the membrane tube 2200, and thus a final humidity of the cathode reaction gas differs accordingly. Namely, the humidity of the cathode reaction gas can be regulated by controlling the position of the cathode reaction gas inlet 2120 through which the cathode reaction gas enters the humidifier 2000, that is, by controlling the position of the valve core 200 in the control valve 1000.

In some embodiments, as shown in FIG. 14 to FIG. 16, the control valve 1000 may be communicated with the cathode reaction gas outlet 2160 of the humidifier 2000, such that the humidifier 2000 is provided with at least two cathode reaction gas outlets 2160 at different positions. Consequently, distances between the cathode reaction gas outlets 2160 at different positions in the humidifier 2000 and the cathode reaction gas inlet 2120 are different. When the cathode reaction gas flows out the humidifier 2000 through the cathode reaction gas outlets 2160 at different positions, the effective exchange lengths of the cathode reaction gas along a length direction of the membrane tube 2200 inside the humidifier 2000 are different. This results in different water exchange efficiencies on both sides of the membrane tube 2200, and thus a final humidity of the cathode reaction gas differs accordingly. Namely, the humidity of the cathode reaction gas can be regulated by controlling the position of the cathode reaction gas outlet 2160 through which the cathode reaction gas flows out the humidifier 2000, that is, by controlling the position of the valve core 200 in the control valve 1000.

In some embodiments, the humidifier 2000 may be provided with two control valves 1000. One control valve 1000 is communicated with the cathode reaction gas inlet 2120 of the humidifier 2000, and another control valve 1000 is communicated with the cathode reaction gas outlet 2160 of the humidifier 2000, such that the humidifier 2000 is provided with at least two cathode reaction gas inlets 2120 at different positions and at least two cathode reaction gas outlets 2160 at different positions. Consequently, distances between the cathode reaction gas inlets 2120 at different positions and the cathode reaction gas outlets 2160 at different positions in the humidifier 2000 are different. When the cathode reaction gas enters the humidifier 2000 through the cathode reaction gas inlets 2120 at different positions and flows out the humidifier 2000 through the cathode reaction gas outlets 2160 at different positions, the effective exchange lengths of the cathode reaction gas along a length direction of the membrane tube 2200 inside the humidifier 2000 are different. This results in different water exchange efficiencies on both sides of the membrane tube 2200, and thus a final humidity of the cathode reaction gas differs accordingly. Namely, the humidity of the cathode reaction gas can be regulated by controlling the position of the cathode reaction gas inlet 2120 through which the cathode reaction gas enters the humidifier 2000 and the position of the cathode reaction gas outlet 2160 through which the cathode reaction gas flows out the humidifier 2000, that is, by controlling the positions of the valve cores 200 in the two control valves 1000.

In the above-described embodiments, the rotation angle of the valve core 200 in the control valve 1000 can be controlled according to the humidity of the cathode reaction gas detected by the humidity sensor in the fuel cell system, so as to change the position of the cathode reaction gas inlet 2120 and/or the position of the cathode reaction gas outlet 2160. This realizes the purpose of changing the effective exchange length of the cathode reaction gas along the length direction of the membrane tube 2200 in the humidifier 2000, thereby increasing or decreasing the humidity of the cathode reaction gas entering the fuel cell 3600.

In the above-described embodiments, the humidifier 2000 possess a humidity self-regulation function by controlling the control valve 1000. The humidity regulation and control is simple, and no pressure fluctuation occurs in the cathode reaction gas path, which is conducive to improving the service life and voltage stability of the fuel cell 3600. Meanwhile, the humidifier 2000 features a compact structure, and no redundant pipelines and joints, which eliminates the increase of leakage points in the cathode reaction gas path of the fuel cell system and improves the operational stability of the fuel cell system.

As an optional implementation, as shown in FIG. 1 to FIG. 12, the valve seat 100 is provided with fourth valve seat openings 111 communicated with the core cavity 110, and the fourth valve seat openings 111, the first valve seat opening 121, and the second valve seat opening 131 are located on a same side of the valve seat 100; and the valve core 200 is provided with fourth valve openings 212 communicated with the second valve opening 223, and the valve core 200 rotates relative to the valve seat 100, so as to enable the fourth valve openings 212 to correspondingly communicate with the fourth valve seat openings 111.

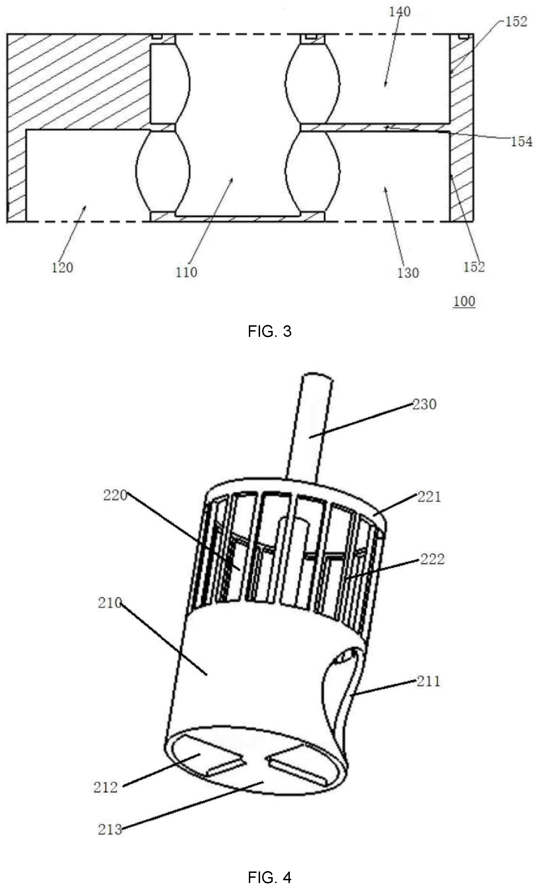

In some embodiments, as shown in FIG. 1 and FIG. 4, the valve seat 100 is provided with the fourth valve seat openings 111 communicated with the core cavity 110, and the fourth valve seat openings 111, the first valve seat opening 121, and the second valve seat opening 131 are located on the same side of the valve seat 100. When the control valve 1000 is disposed in the humidifier 2000, the fourth valve seat openings 111, the first valve seat opening 121, and the second valve seat opening 131 may be communicated with a humidification chamber 2110 of the humidifier 2000, respectively. Meanwhile, the valve core 200 is provided with the fourth valve openings 212 communicated with the second valve opening 223, and by rotating the valve core 200 relative to the valve seat 100, the fourth valve openings 212 can be correspondingly communicated with the fourth valve seat openings 111. In this case, the cathode reaction gas can pass through the fourth valve seat openings 111 and the third valve seat opening 141 to enter the interior of the valve core 200, and can further enter the third flow channel 140 through the second valve opening 223, and finally be discharged through the third valve seat opening 141 communicated with the third flow channel 140. In these embodiments, by arranging the fourth valve seat openings 111 in the valve seat 100 and the fourth valve openings 212 in the valve core 200, an additional position for the cathode reaction gas to enter the control valve 1000 can be added to the control valve 1000. Correspondingly, when the control valve 1000 is disposed in the humidifier 2000, an additional position of the cathode reaction gas inlet 2120 and/or an additional position of the cathode reaction gas outlet 2160 can be added to the humidifier 2000. This enables the humidifier 2000 to have more cathode reaction gas flow paths with different effective exchange lengths, thereby endowing the humidifier 2000 with a humidity regulation function featuring more types and more flexible and precise regulation performance.

In some embodiments, as shown in FIG. 1 to FIG. 3, the valve seat 100 includes a bottom wall of the valve seat 151, a side wall of the valve seat 152, a top wall of the valve seat 153, and a partition plate of the valve seat 154. The valve seat 100 forms an internal cavity by means of the bottom wall of the valve seat 151, the side wall of the valve seat 152, and the top wall of the valve seat 153, and the partition plate is arranged in the internal cavity to divide the internal cavity into the core cavity 110, the first flow channel 120, the second flow channel 130, and the third flow channel 140. As shown in FIG. 3, the valve seat 100 can be divided into an upper part and a lower part by means of the partition plate. The first flow channel 120 and the second flow channel 130 are located in the lower part of the valve seat 100, while the third flow channel 140 is located in the upper part of the valve seat 100. The third flow channel 140 is isolated from the first flow channel 120 and the second flow channel 130 by the partition plate. The lower part of the core cavity 110 is located between the first flow channel 120 and the second flow channel 130, and is communicated with the first flow channel 120 and the second flow channel 130. The upper part of the core cavity 110 is located at the end of the first flow channel 120 and is communicated with the third flow channel 140. In other words, as shown in FIG. 3, in a horizontal direction, the first flow channel 120, the lower part of the core cavity 110, and the second flow channel 130 are communicated in sequence, and the upper part of the core cavity 110 is communicated with the third flow channel 140; while in a vertical direction, the lower part of the core cavity 110 is communicated with the upper part of the core cavity 110, thereby allowing the valve core 200 to be disposed in the core cavity 110.

In some embodiments, as shown in FIG. 1 to FIG. 3, the fourth valve seat openings 111 may be provided at the position of the bottom wall of the valve seat 100 corresponding to the core cavity 110. Correspondingly, the fourth valve openings 212 are provided on the valve core 200. By rotating the valve core 200 relative to the valve seat 100, the fourth valve openings 212 can correspond to the fourth valve seat openings 111, thereby enabling communication between the fourth valve seat openings 111 and the fourth valve openings 212. In addition, since the fourth valve openings 212 are communicated with the second valve opening 223, the cathode reaction gas can enter the fourth valve openings 212 of the valve core 200 through the fourth valve seat openings 111 of the valve seat 100, then enter the third flow channel 140 of the valve seat 100 through the second valve opening 223 of the valve core 200, and further flow out of the third flow channel 140 through the third valve seat opening 141.

In some embodiments, as shown in FIG. 3, the first flow channel 120, the second flow channel 130, and the third flow channel 140 may be cylindrical flow channels. As shown in FIG. 1 and FIG. 2, the first valve seat opening 121, the second valve seat opening 131, and the third valve seat opening 141 may be circular openings, while the fourth valve seat openings 111 may be symmetrically arranged fan-shaped openings.

In other embodiments, the first flow channel 120, the second flow channel 130, and the third flow channel 140 are rectangular flow channels or flow channel structures of other shapes. The first valve seat opening 121, the second valve seat opening 131, the third valve seat opening 141, and the fourth valve seat openings 111 may be openings of various shapes such as rectangular openings, fan-shaped openings, trapezoidal openings, and triangular openings. It is only required that these openings can realize the communication between the first flow channel 120, the second flow channel 130, the third flow channel 140, the core cavity 110, and the exterior of the valve seat 100, and no further details are described herein.

As an optional implementation, as shown in FIG. 4 to FIG. 6, the valve core 200 includes a bottom core body 210 with a hollow cylindrical structure and a top core body 220 with a hollow cylindrical structure, where a side wall of the bottom core body 214 is provided with the first valve opening 211, a bottom surface of the bottom core body 213 is provided with the fourth valve openings 212, and a side wall of the top core body 222 is provided with the second valve opening 223.

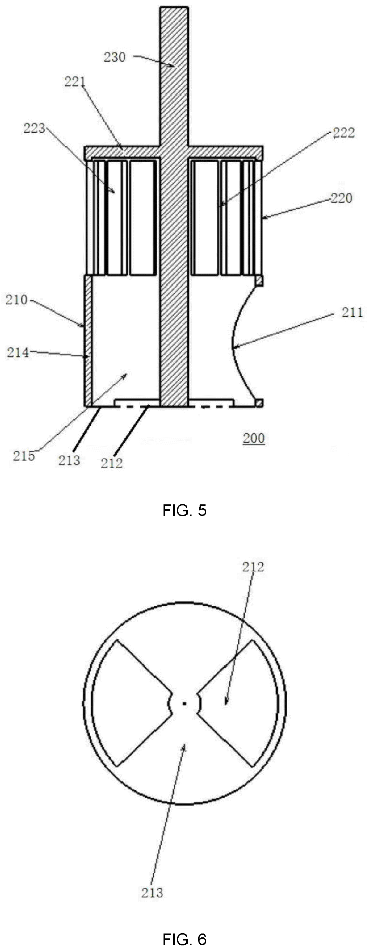

In some embodiments, as shown in FIG. 4 to FIG. 6, the valve core 200 may be of a cylindrical structure as a whole, with a hollow structure in interior. As shown in FIG. 5, the valve core 200 may be divided into an upper part and a lower part, namely, the valve core 200 is divided into a bottom core body 210 and a top core body 220. The hollow structure inside the bottom core body 210 forms a bottom flow channel 215, and the hollow structure inside the top core body 220 forms a top flow channel. The bottom flow channel 215 inside the bottom core body 210 and the top flow channel of the top core body 220 may either be directly communicated, or be communicated via a structure such as a filter screen. When the valve core 200 is disposed in the core cavity 110 of the valve seat 100, the bottom core body 210 is located in the lower part of the core cavity 110, and the top core body 220 is located in the upper part of the core cavity 110.

As shown in FIG. 4 and FIG. 5, the first valve opening 211 is provided on the side wall of the bottom core body 214. By rotating the valve core 200 relative to the valve seat 100, the first valve opening 211 can be oriented toward the first flow channel 120, thereby enabling the first valve opening 211 to be communicated with the first flow channel 120. Meanwhile, the side wall of the bottom core body 214 blocks off the second flow channel 130, thus disconnecting the valve core 200 from the second flow channel 130, and the flow path of the cathode reaction gas in the control valve 1000 is the first flow channel 120, the valve core 200, and the third flow channel 140. After rotating the valve core 200 by 180° relative to the valve seat 100, the first valve opening 211 can be oriented toward the second flow channel 130, thereby enabling the first valve opening 211 to be communicated with the second flow channel 130. Meanwhile, the side wall of the bottom core body 214 blocks off the first flow channel 120, thus disconnecting the valve core 200 from the first flow channel 120, and the flow path of the cathode reaction gas in the control valve 1000 is the second flow channel 130, the valve core 200, and the third flow channel 140.

As shown in FIG. 4 and FIG. 6, the fourth valve openings 212 are provided in the bottom surface of the bottom core body 213. By rotating the valve core 200 relative to the valve seat 100, the first valve opening 211 is moved away from the direction of the first flow channel 120 and the direction of the second flow channel 130, while the fourth valve openings 212 correspond to the fourth valve seat openings 111. In this way, the side wall of the bottom core body 214 blocks off the first flow channel 120 and the second flow channel 130, thus disconnecting the valve core 200 from the first flow channel 120 and the second flow channel 130. The valve core 200 is communicated with the exterior of the valve seat 100 via the fourth valve openings 212 and the fourth valve seat openings 111, and the flow path of the cathode reaction gas in the control valve 1000 is the valve core 200 and the third flow channel 140.

As shown in FIG. 4 and FIG. 5, the second valve opening 223 is provided on the side wall of the top core body 222. To ensure that the second valve opening 223 of the valve core 200 is always in communication with the third flow channel 140 of the valve seat 100 regardless of the rotational position of the valve core 200, a plurality of second valve openings 223 are provided on the side wall of the top core body 222. The plurality of second valve openings 223 are evenly distributed on the side wall of the top core body 222, such that the remaining part of the side wall of the top core body 222 forms a grid structure. Thus, the side wall of the top core body 222 always has a second valve opening 223 in communication with the third flow channel 140 regardless of the rotational state of the valve core 200.

In some embodiments, as shown in FIG. 3 and FIG. 4, the core cavity 110 is of a cylindrical structure, and the upper part of the core cavity 110 has a same diameter as the lower part of the core cavity 110. Correspondingly, the valve core 200 is of a cylindrical structure. When the valve core 200 is disposed in the core cavity 110, the valve core 200 can match the structure of the core cavity 110, forming a clearance fit connection between the valve core 200 and the core cavity 110. This not only enables the valve core 200 to rotate inside the core cavity 110, but also prevents the cathode reaction gas from leaking through a gap between the valve core 200 and the core cavity 110.

In some other embodiments, the upper part and the lower part of the core cavity 110 may be cylindrical structures with different diameters, respectively. Correspondingly, the top core body 220 and the bottom core body 210 in the valve core 200 are also cylindrical structures with different diameters. When the valve core 200 is disposed in the core cavity 110, the top core body 220 matches the structure of the upper part of the core cavity 110, and the bottom core body 210 matches the structure of the lower part of the core cavity 110.

In the control valve 1000 of the present application, both structures of the core cavity 110 and the valve core 200 may be adaptively adjusted based on design requirements, and no further details are described herein.

As an optional implementation, as shown in FIG. 4 and FIG. 5, a distribution range of the first valve opening 211 on the side wall of the bottom core body 214 is less than or equal to 90°.

In some embodiments, as shown in FIG. 4 and FIG. 5, the distribution range of the first valve opening 211 on the side wall of the bottom core body 214 is set to be less than or equal to 90°. This setting can ensure that when the valve core 200 is rotated to a state where the first valve opening 211 is communicated with the fourth valve seat openings 111, the first valve opening 211 corresponds to the side wall of the valve seat 152. The side wall of the valve seat 152 can block off the first valve opening 211, thus preventing the first valve opening 211 from being communicated with the first flow channel 120 or the second flow channel 130.

In some embodiments, as shown in FIG. 4, the first valve opening 211 provided on the side wall of the bottom core body 214 is circular. Alternatively, the first valve opening 211 is circular, the first flow channel 120 and the second flow channel 130 are circular flow channels, and the diameter of the first valve opening 211 is the same as that of the first flow channel 120 and the second flow channel 130.

In some other embodiments, the first valve opening 211 provided on the side wall of the bottom core body 214 may be rectangular. In addition, the first valve opening 211 may also be of other shapes, such as triangular.

As an optional implementation, as shown in FIG. 1 and FIG. 4 to FIG. 6, the fourth valve seat openings 111 are arc-shaped openings or fan-shaped openings less than or equal to 90°, and the fourth valve openings 212 are arc-shaped openings or fan-shaped openings less than or equal to 90°; or the fourth valve seat openings 111 are two oppositely arranged arc-shaped openings or fan-shaped openings each less than or equal to 90°, and the fourth valve openings 212 are two oppositely arranged arc-shaped openings or fan-shaped openings each less than or equal to 90°; and when the first valve opening 211 is not communicated with the first flow channel 120 or the second flow channel 130, the fourth valve openings 212 are communicated with the fourth valve seat openings 111.

In some embodiments, both the fourth valve seat openings 111 and the fourth valve openings 212 are configured as arc-shaped openings or fan-shaped openings less than or equal to 90°, or both are configured as two oppositely arranged arc-shaped openings or fan-shaped openings each less than or equal to 90°. This configuration enables the fourth valve seat openings 111 to match the structure of the fourth valve openings 212. During the rotation of the valve core 200 relative to the valve seat 100, the fourth valve openings 212 can be rotated to a position corresponding to the fourth valve seat openings 111, and the fourth valve openings 212 can overlap the fourth valve seat openings 111, thereby communicating the bottom flow channel 215 of the valve core 200 with the exterior of the control valve 1000.

In some embodiments, the first valve opening 211 is provided on the side wall of the bottom core body 214, and fan-shaped openings are provided as the fourth valve openings 212 at the position of the bottom surface of the bottom core body 213 corresponding to the first valve opening 211. Correspondingly, fan-shaped openings are provided as the fourth valve seat openings 111 at the position of the bottom wall of the valve seat 151 corresponding to the core cavity 110 and in a direction perpendicular to the first flow channel 120/the second flow channel 130. When the valve core 200 is rotated to enable the first valve opening 211 to be communicated with the first flow channel 120, the fourth valve openings 212 are staggered with the fourth valve seat openings 111 and blocked off by the bottom wall of the valve seat 151, and the second flow channel 130 is blocked off by the side wall of the bottom core body 214. By rotating the valve core 200 by 90°, the fourth valve openings 212 can be correspondingly communicated with the fourth valve seat openings 111. In this case, the first valve opening 211 is staggered with the first flow channel 120 and the first flow channel 120 is blocked off by the side wall of the bottom core body 214; and the first valve opening 211 is staggered with the second flow channel 130 and the second flow channel 130 is blocked off by the side wall of the bottom core body 214. By continuing to rotate the valve core 200 by another 90° in an original rotation direction, the first valve opening 211 can be communicated with the second flow channel 130. In this case, the fourth valve openings 212 are staggered with the fourth valve seat openings 111 and blocked off by the bottom wall of the valve seat 151, and the first flow channel 120 is blocked off by the side wall of the bottom core body 214. By continuing to rotate the valve core 200 by a further 90° in the original rotation direction, the first valve opening 211 can be staggered with the first flow channel 120 and the first flow channel 120 is blocked off by the side wall of the bottom core body 214; the first valve opening 211 is staggered with the second flow channel 130 and the second flow channel 130 is blocked off by the side wall of the bottom core body 214; and the fourth valve openings 212 are staggered with the fourth valve seat openings 111 and blocked off by the bottom wall of the valve seat 151. In other words, the control valve 1000 is in a closed state.

In some other embodiments, the first valve opening 211 is provided on the side wall of the bottom core body 214, and fan-shaped openings are provided as the fourth valve openings 212 at the position of the bottom surface of the bottom core body 213 staggered with the first valve opening 211. Correspondingly, fan-shaped openings are provided as the fourth valve seat openings 111 at the position of the bottom wall of the valve seat 151 corresponding to the core cavity 110 and in a direction corresponding to the first flow channel 120/the second flow channel 130. When the valve core 200 is rotated to enable the first valve opening 211 to be communicated with the first flow channel 120, the fourth valve openings 212 are staggered with the fourth valve seat openings 111 and blocked off by the bottom wall of the valve seat 151, and the second flow channel 130 is blocked off by the side wall of the bottom core body 214. By rotating the valve core 200 by 90°, the fourth valve openings 212 can be correspondingly communicated with the fourth valve seat openings 111. In this case, the first valve opening 211 is staggered with the first flow channel 120 and the first flow channel 120 is blocked off by the side wall of the bottom core body 214; and the first valve opening 211 is staggered with the second flow channel 130 and the second flow channel 130 is blocked off by the side wall of the bottom core body 214. By continuing to rotate the valve core 200 by another 90° in an original rotation direction, the first valve opening 211 can be communicated with the second flow channel 130. In this case, the fourth valve openings 212 are staggered with the fourth valve seat openings 111 and blocked off by the bottom wall of the valve seat 151, and the first flow channel 120 is blocked off by the side wall of the bottom core body 214. By continuing to rotate the valve core 200 by a further 90° in the original rotation direction, the first valve opening 211 can be staggered with the first flow channel 120 and the first flow channel 120 is blocked off by the side wall of the bottom core body 214; the first valve opening 211 is staggered with the second flow channel 130 and the second flow channel 130 is blocked off by the side wall of the bottom core body 214; and the fourth valve openings 212 are staggered with the fourth valve seat openings 111 and blocked off by the bottom wall of the valve seat 151. In other words, the control valve 1000 is in a closed state.

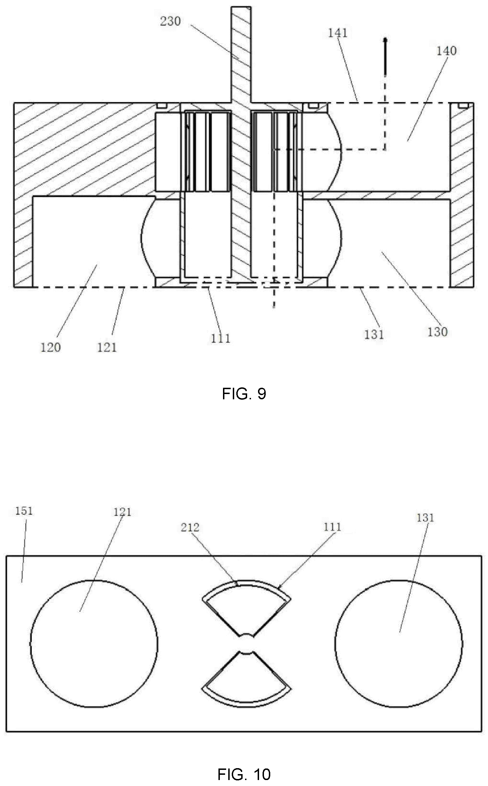

In some embodiments, as shown in FIG. 1 and FIG. 4 to FIG. 6, the first valve opening 211 is provided on the side wall of the bottom core body 214, and two oppositely arranged fan-shaped openings are provided as the fourth valve openings 212 at the position of the bottom surface of the bottom core body 213 corresponding to the first valve opening 211. Correspondingly, two oppositely arranged fan-shaped openings are provided as the fourth valve seat openings 111 at the position of the bottom wall of the valve seat 151 corresponding to the core cavity 110 and in a direction perpendicular to the first flow channel 120/the second flow channel 130. As shown in FIG. 7 and FIG. 8, when the valve core 200 is rotated to enable the first valve opening 211 to be communicated with the first flow channel 120, the fourth valve openings 212 are staggered with the fourth valve seat openings 111 and blocked off by the bottom wall of the valve seat 151, the second flow channel 130 is blocked off by the side wall of the bottom core body 214, and the cathode reaction gas enters the first flow channel 120 through the first valve seat opening 121, then enters the valve core 200 and the third flow channel 140, and is finally discharged out of the control valve 1000 through the third valve seat opening 141. By rotating the valve core 200 by 90°, as shown in FIG. 9 and FIG. 10, the two fan-shaped openings serving as the fourth valve openings 212 can be correspondingly communicated with the two fan-shaped openings serving as the fourth valve seat openings 111. In this case, the first valve opening 211 is staggered with the first flow channel 120 and the first flow channel 120 is blocked off by the side wall of the bottom core body 214; the first valve opening 211 is staggered with the second flow channel 130 and the second flow channel 130 is blocked off by the side wall of the bottom core body 214; and the cathode reaction gas enters the valve core 200 and the third flow channel 140 through the fourth valve seat openings 111, and is finally discharged out of the control valve 1000 through the third valve seat opening 141. By continuing to rotate the valve core 200 by another 90° in an original rotation direction, as shown in FIG. 11 and FIG. 12, the first valve opening 211 can be communicated with the second flow channel 130. In this case, the fourth valve openings 212 are staggered with the fourth valve seat openings 111 and blocked off by the bottom wall of the valve seat 151, the first flow channel 120 is blocked off by the side wall of the bottom core body 214, and the cathode reaction gas enters the second flow channel 130 through the second valve seat opening 131, then enters the valve core 200 and the third flow channel 140, and is finally discharged out of the control valve 1000 through the third valve seat opening 141.

In some embodiments, the first valve opening 211 is provided on the side wall of the bottom core body 214, and two oppositely arranged fan-shaped openings are provided as the fourth valve openings 212 at the position of the bottom surface of the bottom core body 213 staggered with the first valve opening 211. Correspondingly, two oppositely arranged fan-shaped openings are provided as the fourth valve seat openings 111 at the position of the bottom wall of the valve seat 151 corresponding to the core cavity 110 and in a direction corresponding to the first flow channel 120/the second flow channel 130. When the valve core 200 is rotated to enable the first valve opening 211 to be communicated with the first flow channel 120, the fourth valve openings 212 are staggered with the fourth valve seat openings 111 and blocked off by the bottom wall of the valve seat 151, and the second flow channel 130 is blocked off by the side wall of the bottom core body 214. By rotating the valve core 200 by 90°, the two fan-shaped openings serving as the fourth valve openings 212 can be correspondingly communicated with the two fan-shaped openings serving as the fourth valve seat openings 111. In this case, the first valve opening 211 is staggered with the first flow channel 120 and the first flow channel 120 is blocked off by the side wall of the bottom core body 214; and the first valve opening 211 is staggered with the second flow channel 130 and the second flow channel 130 is blocked off by the side wall of the bottom core body 214. By continuing to rotate the valve core 200 by another 90° in an original rotation direction, the first valve opening 211 can be communicated with the second flow channel 130. In this case, the fourth valve openings 212 are staggered with the fourth valve seat openings 111 and blocked off by the bottom wall of the valve seat 151, and the first flow channel 120 is blocked off by the side wall of the bottom core body 214.

In the above-described embodiments of the present application, every time the valve core 200 rotates by 90°, the valve core 200 can completely switch among three communication states-i.e., the direct communication between the valve core 200 and the first flow channel 120, the second flow channel 130, and the exterior of the control valve 1000.

In the present application, the valve core 200 may also be rotated relative to the valve seat 100 with a smaller angle of rotation, thereby achieving a higher regulation precision of the humidity for the control valve 1000. For example, in an initial state where the first valve opening 211 of the valve core 200 is communicated with the first flow channel 120, the fourth valve openings 212 are staggered with the fourth valve seat openings 111 and blocked off by the bottom wall of the valve seat 151, and the second flow channel 130 is blocked off by the side wall of the bottom core body 214, the valve core 200 is rotated by 45° relative to the valve seat 100. In this case, the first valve opening 211 is in a half-open communication state with the first flow channel 120, the fourth valve openings 212 are in a half-open communication state with the fourth valve seat openings 111, the second flow channel 130 is in a blocked state, and the cathode reaction gas can partially enter the control valve 1000 through the first valve seat opening 121 and partially enter the control valve 1000 through the fourth valve seat openings 111.

In some embodiments, the fourth valve seat openings 111 are configured as arc-shaped openings or fan-shaped openings less than or equal to 90°, and the fourth valve openings 212 are configured as arc-shaped openings or fan-shaped openings less than or equal to 90°; alternatively, the fourth valve seat openings 111 are configured as two oppositely arranged arc-shaped openings or fan-shaped openings each less than or equal to 90°, and the fourth valve openings 212 are configured as two oppositely arranged arc-shaped openings or fan-shaped openings each less than or equal to 90°. This configuration ensures that when the valve core 200 is rotated to a position where the first valve opening 211 is fully and correspondingly communicated with the first flow channel 120 or the second flow channel 130, the fourth valve openings 212 are staggered with the fourth valve seat openings 111, which means that the cathode reaction gas cannot enter the valve core 200 through the fourth valve seat openings 111 and the fourth valve openings 212.

Optionally, the fourth valve seat openings 111 are configured as arc-shaped openings or fan-shaped openings less than 90°, and the fourth valve openings 212 are configured as arc-shaped openings or fan-shaped openings less than 90°; alternatively, the fourth valve seat openings 111 are configured as two oppositely arranged arc-shaped openings or fan-shaped openings each less than 90°, and the fourth valve openings 212 are configured as two oppositely arranged arc-shaped openings or fan-shaped openings each less than 90°. When the valve core 200 is rotated to a position where the first valve opening 211 is fully and correspondingly communicated with the first flow channel 120 or the second flow channel 130, the fourth valve openings 212 are completely staggered with and disconnected from the fourth valve seat openings 111.

Optionally, a radian of the arc-shaped opening or fan-shaped opening serving as the fourth valve opening 212 may be configured to be less than or equal to that of the arc-shaped opening or fan-shaped opening serving as the fourth valve seat opening 111, so as to further ensure that when the valve core 200 is rotated to a position where the first valve opening 211 is fully and correspondingly communicated with the first flow channel 120 or the second flow channel 130, the fourth valve openings 212 are completely staggered with and disconnected from the fourth valve seat openings 111.

In some embodiments, as shown in FIG. 10, a diameter of the arc-shaped opening or fan-shaped opening serving as the fourth valve opening 212 may be configured to be less than or equal to that of the arc-shaped opening or fan-shaped opening serving as the fourth valve seat opening 111.

It should be noted that a center of the arc-shaped opening or fan-shaped opening serving as the fourth valve opening 212 coincides with that of the arc-shaped opening or fan-shaped opening serving as the fourth valve seat opening 111. This configuration ensures that during the rotation of the valve core 200 relative to the valve seat 100, the fourth valve openings 212 can completely coincide with the fourth valve seat openings 111, so as to achieve a maximum opening state of the fourth valve openings 212; and it also enables the fourth valve openings 212 to be completely staggered with the fourth valve seat openings 111, so as to achieve a closed state of the fourth valve openings 212.

As an optional implementation, the valve core 200 further includes a transmission shaft 230 disposed on the top core body 220, and the transmission shaft 230 passes through the core cavity 110 and is located outside the valve seat 100.

In some embodiments, as shown in FIG. 7, the transmission shaft 230 may be disposed on the top surface of the top core body 221. Correspondingly, a through hole may be provided in the top wall of the valve seat 153, which penetrates the core cavity 110 and the exterior of the valve seat 100, so that the transmission shaft 230 can pass through the through hole and be located outside the valve seat 100. A drive apparatus may be provided on the top wall of the valve seat 153, and the drive apparatus drives the transmission shaft 230 to rotate, thereby achieving the purpose of driving the valve core 200 to rotate and enabling the automatic control of the control valve 1000.

In some embodiments, the drive apparatus may be a motor 300, which drives the valve core 200 to rotate relative to the valve seat 100, such that a rotation range of the valve core 200 is at least 0° to 180°. Optionally, the rotation range of the valve core 200 may also be configured to 0° to 270° or 0° to 360°.

Optionally, within the aforementioned rotation range, the valve core 200 may stop at any rotational position inside the core cavity 110 in accordance with a humidity regulation target of the cathode reaction gas.

It should be noted that in order to enable the stable rotation of the valve core 200, a rotation axis of the transmission shaft 230 needs to coincide with that of the valve core 200; in other words, the transmission shaft 230 needs to be disposed at a center of the top surface of the top core body 221.

In the above-described embodiments, optionally, as shown in FIG. 7, FIG. 9, and FIG. 11, a length of the third flow channel 140 in a vertical direction may be set to be equal to that of the top core body 220 in the vertical direction; in other words, the length of the third flow channel 140 in the vertical direction is equal to the sum of a top thickness of the top core body 220 and a length of the grid.

In the above-described embodiments, optionally, as shown in FIG. 3, a diameter of a through-opening between the core cavity 110 and the third flow channel 140 is not less than the length of the grid, so as to ensure that the cathode reaction gas passing through the grid on the top core body 220 is not blocked.

In the above-described embodiments, optionally, as shown in FIG. 7, FIG. 9, and FIG. 11, the sum of a height of the valve core 200 in the vertical direction and a thickness of the bottom wall of the valve core 200 is the same as an overall height of the valve seat 100 in the vertical direction, thus enabling both upper and lower ends of the valve core 200 to be flush with the exterior of the valve seat 100 after the valve core 200 is disposed in the core cavity 110.

In the above-described embodiments of the present application, in order to enable each valve seat opening of the valve seat 100 to be connected to the humidifier 2000, each opening of the valve seat 100 may be protruded relative to an outer surface of the valve housing to form a connector portion, or a connector portion for connection may be provided inside each opening of the valve seat 100. In addition, a sealing structure such as a sealing ring may also be disposed at a corresponding position to ensure the sealing performance after connection.

Based on a same inventive concept, the embodiments of the present application further provide a humidifier 2000. As shown in FIG. 1 to FIG. 16, the humidifier 2000 includes:

a housing 2100 having a humidification chamber 2110 therein, the housing 2100 being provided with a cathode reaction gas inlet 2120 and a cathode reaction gas outlet 2160 that are communicated with the humidification chamber 2110;

a membrane tube 2200 disposed in the humidification chamber 2110, the housing 2100 being provided with a humid and hot tail gas inlet 2210 and a humid and hot tail gas outlet 2220 that are communicated with the membrane tube 2200; and

the above-described control valve 1000, the control valve 1000 being disposed on the housing 2100, and the first valve seat opening 121 and the second valve seat opening 131 of the control valve 1000 being communicated with the humidification chamber 2110 via the cathode reaction gas inlet 2120, or the first valve seat opening 121 and the second valve seat opening 131 of the control valve 1000 being communicated with the humidification chamber 2110 via the cathode reaction gas outlet 2160.

Since the humidifier 2000 provided in the present application includes the control valve 1000 according to the above-described technical solutions, the humidifier 2000 provided in the present application has all the beneficial effects of the above-described control valve 1000, which will not be described herein.

As an optional implementation, the valve seat 100 is provided with fourth valve seat openings 111 communicated with the core cavity 110 of the valve core 200, and the fourth valve seat openings 111, the first valve seat opening 121, and the second valve seat opening 131 are located on a same side of the valve seat 100; the valve core 200 is provided with fourth valve openings 212 communicated with the second valve opening 223, and the valve core 200 rotates relative to the valve seat 100, so as to enable the first valve opening 211 to correspondingly communicate with the first flow channel 120 or the second flow channel 130, or enable the fourth valve openings 212 to communicate with the fourth valve seat openings 111; and the fourth valve seat openings 111 are communicated with the humidification chamber 2110.

In some embodiments, as shown in FIG. 13 to FIG. 16, the humidifier 2000 includes the housing 2100. Inside the housing 2100, a potting partition plate 2130 divides the internal space of the housing 2100 into a humid and hot tail gas inlet flow channel 2140, a humidification chamber 2110, and a humid and hot tail gas outlet flow channel 2150. A plurality of relatively parallel membrane tubes 2200 are arranged in the humidification chamber 2110, and both ends of the membrane tubes 2200 pass through the potting partition plate 2130 to be respectively located in the humid and hot tail gas inlet flow channel 2140, the humidification chamber 2110, and the humid and hot tail gas outlet flow channel 2150. The humid and hot tail gas inlet 2210 is formed in the portion of the housing 2100 corresponding to the humid and hot tail gas inlet flow channel 2140, and the humid and hot tail gas outlet 2220 is formed in the portion of the housing 2100 corresponding to the humid and hot tail gas outlet flow channel 2150. Consequently, the humid and hot tail gas can flow through the humidifier 2000 along the path of the humid and hot tail gas inlet 2210, the humid and hot tail gas inlet flow channel 2140, the membrane tubes 2200, the humid and hot tail gas outlet flow channel 2150, and the humid and hot tail gas outlet 2220. The cathode reaction gas inlet 2120 and the cathode reaction gas outlet 2160 are formed in the portion of the housing 2100 corresponding to the humidification chamber 2110. The cathode reaction gas can enter the humidification chamber 2110 through the cathode reaction gas inlet 2120, exchange heat with the humid and hot tail gas inside the membrane tubes 2200 in the humidification chamber 2110, and mix with the water released from the membrane tubes 2200, so as to increase the humidity of the cathode reaction gas. After that, the cathode reaction gas is discharged out of the humidification chamber 2110 through the cathode reaction gas outlet 2160.

In some embodiments, as shown in FIG. 14 to FIG. 16, pipe joints protruding relative to the housing 2100 may be respectively disposed at the cathode reaction gas inlet 2120 and the cathode reaction gas outlet 2160, so as to facilitate connection to cathode reaction gas pipelines or to respective openings of the valve seat 100 of the control valve 1000. The pipe joints protruding relative to the housing 2100 may be respectively disposed at the humid and hot tail gas inlet 2210 and the humid and hot tail gas outlet 2220, so as to facilitate connection to humid and hot tail gas pipelines.

In some embodiments, as shown in FIG. 14 to FIG. 16, the control valve 1000 may be communicated with the cathode reaction gas outlet 2160 of the humidifier 2000. Correspondingly, three cathode reaction gas outlets 2160 are formed in the housing 2100, such that positions of the three cathode reaction gas outlets 2160 correspond to those of the first valve seat opening 121, the second valve seat opening 131, and the fourth valve seat openings 111 of the control valve 1000, respectively. As shown in FIG. 14 to FIG. 16, a first cathode reaction gas outlet 2161 is positionally corresponding to and communicated with the first valve seat opening 121; a second cathode reaction gas outlet 2162 is positionally corresponding to and communicated with the second valve seat opening 131; and a fourth cathode reaction gas outlet 2163 is positionally corresponding to and communicated with the fourth valve seat openings 111.

As shown in FIG. 14, when the control valve 1000 is in a state where the first valve opening 211 is correspondingly communicated with the first flow channel 120, the humid and hot tail gas enters the humid and hot tail gas inlet flow channel 2140 through the humid and hot tail gas inlet 2210, and flows into the interiors of a series of membrane tubes 2200, so as to enter the humidification chamber 2110 to perform heat and humidity exchange with the cathode reaction gas, and water migrates to the outside of the membrane tubes 2200 to mix with the cathode reaction gas. The cathode reaction gas enters the humidification chamber 2110 through the cathode reaction gas inlet 2120 and is located outside the membrane tubes 2200, performs heat and humidity exchange with the humid and hot tail gas in the humidification chamber 2110 to be heated and humidified. Subsequently, the cathode reaction gas can flow through the first cathode reaction gas outlet 2161, the first valve seat opening 121, the first flow channel 120, the first valve opening 211, the valve core 200, the second valve opening 223, the third flow channel 140, and the third valve seat opening 141 in sequence. The cathode reaction gas discharged from the humidifier 2000 can be communicated with a cathode of the fuel cell 3600. In this case, an effective exchange length (a left-right direction in the figure) between inner and outer sides of the membrane tube 2200 is relatively small, and an exchange efficiency is relatively low.

As shown in FIG. 15, when the control valve 1000 is in a state where the fourth valve openings 212 are correspondingly communicated with the fourth valve seat openings 111, the humid and hot tail gas enters the humid and hot tail gas inlet flow channel 2140 through the humid and hot tail gas inlet 2210, and flows into the interiors of a series of membrane tubes 2200, so as to enter the humidification chamber 2110 to perform heat and humidity exchange with the cathode reaction gas, and water migrates to the outside of the membrane tubes 2200 to mix with the cathode reaction gas. The cathode reaction gas enters the humidification chamber 2110 through the cathode reaction gas inlet 2120 and is located outside the membrane tubes 2200, performs heat and humidity exchange with the humid and hot tail gas in the humidification chamber 2110 to be heated and humidified. Subsequently, the cathode reaction gas can flow through the fourth cathode reaction gas outlet 2163, the fourth valve seat openings 111, the fourth valve openings 212, the valve core 200, the second valve opening 223, the third flow channel 140, and the third valve seat opening 141 in sequence. The cathode reaction gas discharged from the humidifier 2000 can be communicated with a cathode of the fuel cell 3600. In this case, an effective exchange length (a left-right direction in the figure) between inner and outer sides of the membrane tube 2200 is at a medium level, and an exchange efficiency is also at a medium level.

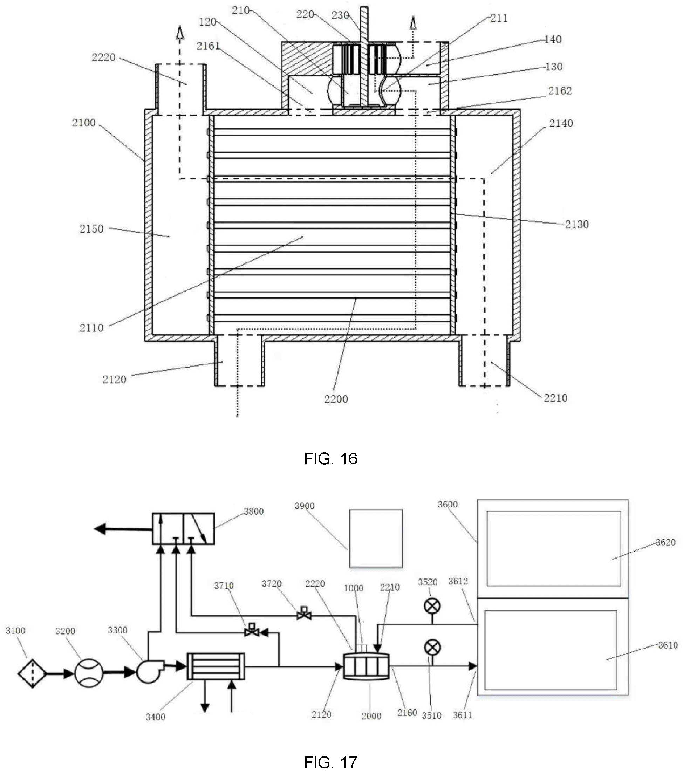

As shown in FIG. 16, when the control valve 1000 is in a state where the first valve opening 211 is correspondingly communicated with the second flow channel 130, the humid and hot tail gas enters the humid and hot tail gas inlet flow channel 2140 through the humid and hot tail gas inlet 2210, and flows into the interiors of a series of membrane tubes 2200, so as to enter the humidification chamber 2110 to perform heat and humidity exchange with the cathode reaction gas, and water migrates to the outside of the membrane tubes 2200 to mix with the cathode reaction gas. The cathode reaction gas enters the humidification chamber 2110 through the cathode reaction gas inlet 2120 and is located outside the membrane tubes 2200, performs heat and humidity exchange with the humid and hot tail gas in the humidification chamber 2110 to be heated and humidified. Subsequently, the cathode reaction gas can flow through the second cathode reaction gas outlet 2162, the second valve seat opening 131, the second flow channel 130, the first valve opening 211, the valve core 200, the second valve opening 223, the third flow channel 140, and the third valve seat opening 141 in sequence. The cathode reaction gas discharged from the humidifier 2000 can be communicated with a cathode of the fuel cell 3600. In this case, an effective exchange length (a left-right direction in the figure) between inner and outer sides of the membrane tube 2200 is relatively large, and an exchange efficiency is relatively high.

In the embodiments of the present application, the position of the cathode reaction gas outlet 2160 can be controlled by means of the control valve 1000, so as to achieve regulation of the humidity of the cathode reaction gas.

As an optional implementation, the control valve 1000 is disposed on a side, opposite to the cathode reaction gas inlet 2120, of the housing 2100.

In some embodiments, as shown in FIG. 14 to FIG. 16, the control valve 1000 is disposed on the side, opposite to the cathode reaction gas inlet 2120, of the housing 2100. The cathode reaction gas outlet 2160 is disposed on the side, opposite to the cathode reaction gas inlet 2120, of the housing 2100, such that the cathode reaction gas outlet 2160 is correspondingly connected to the control valve 1000. As shown in FIG. 14 to FIG. 16, in the vertical direction of the figures, the flow path of the cathode reaction gas is relatively long, which can improve the overall humidification efficiency of the humidifier 2000.

As an optional implementation, any one of the first valve seat opening 121, the second valve seat opening 131, and the fourth valve seat openings 111 are disposed opposite to the cathode reaction gas inlet 2120.

In some embodiments, any one of the first valve seat opening 121, the second valve seat opening 131, and the fourth valve seat openings 111 may be disposed opposite to the cathode reaction gas inlet 2120. Consequently, a distance between the opening of the valve seat 100 disposed opposite to the cathode reaction gas inlet 2120 and the cathode reaction gas inlet 2120 can be minimized, with the corresponding humidification efficiency being relatively low. Meanwhile, distances between remaining openings of the valve seat 100 and the cathode reaction gas inlet 2120 can be set to different values, so that the humidifier 2000 is able to achieve different levels of humidification efficiency.

In other embodiments, the cathode reaction gas inlet 2120 of the humidifier 2000 may be correspondingly connected to the control valve 1000; alternatively, both the cathode reaction gas inlet 2120 and the cathode reaction gas outlet 2160 of the humidifier 2000 may be simultaneously and correspondingly connected to the control valve 1000. The regulation mode of the control valve 1000 for the humidification efficiency of the humidifier 2000 is the same as that in the aforementioned embodiments, which will not be described herein.

Based on a same inventive concept, the embodiments of the present application further provide a fuel cell system. As shown in FIG. 17, the fuel cell system includes the aforementioned humidifier 2000.

Since the fuel cell system provided in the present application includes the humidifier 2000 according to the above-described technical solutions, the fuel cell system provided in the present application has all the beneficial effects of the above-described humidifier 2000, which will not be described herein.

In the following embodiments of the present application, the fuel cell system is exemplarily described by taking air as the cathode reaction gas, but the cathode reaction gas is not limited to air.

In some embodiments, optionally, as shown in FIG. 17, a controller 3900 is in signal connection with each component in the fuel cell system, and is configured to perform information interaction and control on each component.

Before entering the cathode 3610 of the fuel cell 3600, the cathode reaction gas flows through an air filter 3100, an air flow meter 3200, an air compressor 3300, an intercooler 3400, and the humidifier 2000 in sequence. In other words, the air filter 3100, the air flow meter 3200, the air compressor 3300, the intercooler 3400, the humidifier 2000, and a stack inlet for cathode reaction gas entering 3611 are communicated with each other in sequence via pipelines. Fresh and dry air, serving as the cathode reaction gas, enters the air flow meter 3200 for flow measurement after being filtered by the air filter 3100. Subsequently, it is pressurized and heated by the air compressor 3300, cooled down by the intercooler 3400, and then enters the humidifier 2000 for heat and moisture exchange. After being humidified by the humid and hot tail gas, the fresh air with a certain level of humidity as the cathode reaction gas enters a stack to undergo an electrochemical reaction.

The humid and hot tail gas generated by the reaction of the fuel cell 3600 is discharged from the fuel cell 3600 and then flows through the humidifier 2000 and a mixed discharge device 3800 in sequence. In other words, a stack outlet for humid and hot tail gas exiting 3612, the humidifier 2000, and the mixed discharge device 3800 are communicated with each other in sequence via pipelines.

The pipeline between the intercooler 3400 and the humidifier 2000 may also be in communication with the mixed discharge device 3800 via a branch pipe, and a pressure relief valve 3710 may be disposed on the branch pipe to prevent the pressure of the cathode reaction gas entering the humidifier 2000 from being excessively high.

A back pressure valve 3720 may be disposed on the pipeline between the humidifier 2000 and the mixed discharge device 3800. The back pressure valve 3720 can prevent the backflow of the humid and hot tail gas, maintain a constant pressure of the humid and hot tail gas inside the pipeline between the humidifier 2000 and the mixed discharge device 3800, and thus enable the flow rate of the humid and hot tail gas flowing through the humidifier 2000 relatively stable.

The air compressor 3300 may be communicated with the mixed discharge device 3800 via a pipeline, so as to discharge the excessive cathode reaction gas generated by the air compressor 3300 to the mixed discharge device 3800.

A stack inlet humidity sensor 3510 is disposed on the pipeline between the humidifier 2000 and the stack inlet for cathode reaction gas entering 3611, which is configured to detect the humidity of the cathode reaction gas before entering the cathode. On this basis, the humidifier 2000 can be regulated in real time according to a detected humidity value of the cathode reaction gas, and the controller 3900 is configured to regulate the control valve 1000, so as to regulate the stack inlet humidity of the cathode reaction gas and ensure that the stack inlet humidity of the cathode reaction gas meets the design requirements.

A stack outlet humidity sensor 3520 is disposed on the pipeline between the humidifier 2000 and the stack outlet for humid and hot tail gas exiting 3612, which is configured to detect the humidity of the humid and hot tail gas before entering the humidifier 2000. On this basis, the humidifier 2000 can be regulated in real time according to a detected humidity value of the humid and hot tail gas, and the controller 3900 is configured to regulate the control valve 1000, so as to regulate the stack inlet humidity of the cathode reaction gas and ensure that the stack inlet humidity of the cathode reaction gas meets the design requirements.

**In** the aforementioned fuel cell system, priority may be given to an operation solution of the humidifier 2000 with a maximum humidity exchange efficiency, so as to achieve full utilization of the humidifier 2000. When the stack inlet humidity sensor 3510 detects that the stack inlet humidity of the cathode reaction gas exceeds the stack humidity requirement, the state of the valve core 200 of the control valve 1000 can be adjusted by the controller 3900, so as to gradually reduce the humidity exchange efficiency of the humidifier 2000 until the stack inlet humidity of the cathode reaction gas matches the stack humidity requirement.

**In** the fuel cell system according to the embodiments of the present application, the controller 3900 only needs to adjust the rotation angle of the valve core 200 in the control valve 1000 according to the stack inlet humidity of the cathode reaction gas detected by the stack inlet humidity sensor 3510, so as to achieve the purpose of adjusting the stack inlet humidity of the cathode reaction gas. In the fuel cell system, the structure is compact in volume, with no redundant pipelines or joints, and thus no additional leakage points will be introduced. In addition, the control process is simple; it only needs to collect the stack inlet humidity of the cathode reaction gas detected by the stack inlet humidity sensor, and then adjust the rotation angle of the valve core 200 of the control valve 1000.

**In** the present application, unless otherwise expressly specified and defined, a first feature being "above" or "below" a second feature may include not only direct contact between the first and second features but also indirect contact between the first and second features via another feature between them. Furthermore, that the first feature is "over", "above", or "on" the second feature includes that the first feature is directly above and diagonally above the second feature, or merely means that the first feature is higher in level than the second feature. That the first feature is "beneath", "below", or "under" the second feature includes that the first feature is directly below and diagonally below the second feature, or merely means that the first feature is lower in level than the second feature.

**It** should be noted that, all directional indications in the embodiments of the present invention are only intended for explaining a relative position relationship, a motion condition, etc., between components in a certain posture, and if the posture changes, the directional indications change accordingly.

**In** the description of the embodiments of the present application, the technical terms "connection" and "fixed" should be understood in a broad sense unless there is a specific stipulation and limitation. For example, "connection" may be a fixed connection, may also be a dismountable connection or an integrated connection; may also be a mechanical connection or an electrical connection; and may be a direct connection, an indirect connection through an intermediate medium, a connection within two elements or an interaction relationship between two elements. For a person of ordinary skill in the art, a specific meaning of the foregoing terms in the embodiments of the present application may be understood according to a specific situation.

**In** addition, descriptions involving "first", "second", and the like in the present application are merely intended for descriptive purposes and should not be construed as indicating or implying their relative importance or implying the quantity of technical features indicated. Therefore, a feature limited by "first" or "second" may explicitly or implicitly include one or more of such features. **In** the description of the embodiments of the present application, "a plurality of" refers to two or more, unless otherwise expressly and specifically defined.

Although the embodiments of the present application have been shown and described, it may be understood by those of ordinary skill in the art that various changes, modifications, substitutions, and variations can be made to these embodiments without departing from the principle and spirit of the present application, and the scope of the present application is defined by the appended claims and their equivalents.

## Claims

1. A control valve, **characterized in that** the control valve comprises:
a valve seat internally provided with a core cavity, and a first flow channel, a second flow channel, and a third flow channel that are separately communicated with the core cavity, the valve seat being provided with a first valve seat opening communicated with the first flow channel, a second valve seat opening communicated with the second flow channel, and a third valve seat opening communicated with the third flow channel, and the first valve seat opening and the second valve seat opening being located at a same side of the valve seat; and
a valve core rotatably provided in the core cavity, the valve core being provided with a first valve opening and a second valve opening that are communicated with each other, the valve core rotating relative to the valve seat, so as to enable the first valve opening to correspondingly communicate with the first flow channel or the second flow channel, and the second valve opening being configured to communicate with the third flow channel.

2. The control valve according to claim 1, **characterized in that** the valve seat is provided with fourth valve seat openings communicated with the core cavity, and the fourth valve seat openings, the first valve seat opening, and the second valve seat opening are located on a same side of the valve seat; and
the valve core is provided with fourth valve openings communicated with the second valve opening, and the valve core rotates relative to the valve seat, so as to enable the fourth valve openings to correspondingly communicate with the fourth valve seat openings.

3. The control valve according to claim 2, **characterized in that** the valve core comprises a bottom core body with a hollow cylindrical structure and a top core body with a hollow cylindrical structure, a side wall of the bottom core body is provided with the first valve opening, a bottom surface of the bottom core body is provided with the fourth valve openings, and a side wall of the top core body is provided with the second valve opening.

4. The control valve according to claim 3, **characterized in that** a distribution range of the first valve opening on the side wall of the bottom core body is less than or equal to 90°.

5. The control valve according to claim 3 or 4, **characterized in that** the fourth valve seat openings are arc-shaped openings or fan-shaped openings less than or equal to 90°, and the fourth valve openings are arc-shaped openings or fan-shaped openings less than or equal to 90°; alternatively, the fourth valve seat openings are two oppositely arranged arc-shaped openings or fan-shaped openings each less than or equal to 90°, and the fourth valve openings are two oppositely arranged arc-shaped openings or fan-shaped openings each less than or equal to 90°; and when the first valve opening is not communicated with the first flow channel or the second flow channel, the fourth valve openings are communicated with the fourth valve seat openings.

6. The control valve according to claim 3, **characterized in that** the valve core further comprises a transmission shaft disposed on the top core body, and the transmission shaft passes through the core cavity and is located outside the valve seat.

7. A humidifier, **characterized in that** the humidifier comprises:
a housing having a humidification chamber therein, the housing being provided with a cathode reaction gas inlet and a cathode reaction gas outlet that are communicated with the humidification chamber;
a membrane tube disposed in the humidification chamber, the housing being provided with a humid and hot tail gas inlet and a humid and hot tail gas outlet that are communicated with the membrane tube; and
the control valve according to any one of claims 1 to 6, the control valve being disposed on the housing, and the first valve seat opening and the second valve seat opening of the control valve being communicated with the humidification chamber via the cathode reaction gas inlet, or the first valve seat opening and the second valve seat opening of the control valve being communicated with the humidification chamber via the cathode reaction gas outlet.

8. The humidifier according to claim 7, **characterized in that** the valve seat is provided with fourth valve seat openings communicated with the core cavity of the valve core, and the fourth valve seat openings, the first valve seat opening, and the second valve seat opening are located on a same side of the valve seat; the valve core is provided with fourth valve openings communicated with the second valve opening, and the valve core rotates relative to the valve seat, so as to enable the first valve opening to correspondingly communicate with the first flow channel or the second flow channel, or enable the fourth valve openings to communicate with the fourth valve seat openings; and the fourth valve seat openings are communicated with the humidification chamber.

9. The humidifier according to claim 8, **characterized in that** the control valve is disposed on a side, opposite to the cathode reaction gas inlet, of the housing.

10. The humidifier according to claim 9, **characterized in that** any one of the first valve seat opening, the second valve seat opening, and the fourth valve seat openings are disposed opposite to the cathode reaction gas inlet.

11. A fuel cell system, **characterized in that** the fuel cell system comprises the humidifier according to any one of claims 7 to 10.
